(19) Europäisches Patentamt
European Patent Office
Office européen des brevets

(11) Publication number: 0 064 252
A1

# (12) EUROPEAN PATENT APPLICATION

(21) Application number: 82103525.0

(22) Date of filing: 26.04.82

(51) Int. Cl.$^3$: C 02 F 1/52
B 03 D 3/06

(30) Priority: 27.04.81 IT 2139381

(43) Date of publication of application:
10.11.82 Bulletin 82/45

(84) Designated Contracting States:
AT BE CH DE FR GB IT LI LU NL SE

(71) Applicant: PRODECO S.p.A.
Piazza Boldrini
I-20097 San Donato Milanese (Milano)(IT)

(72) Inventor: Spina, Nicola
Via Triulziana
I-22000 San Donato Milanese (Milano)(IT)

(74) Representative: Bühling, Gerhard, Dipl.-Chem. et al,
Patentanwaltsbüro Tiedtke-Bühling-Kinne
Grupe-Pellmann-Grams-Dragotti Bavariaring 4
D-8000 München 2(DE)

## (54) A process for the treatment of the effluent waters of mine extractive industries.

(57) The effluent waters of mine extractive plants, particularly the waters coming out from the mineral sorting after the grinding and the sieve washing are flocculated with a polmeric aluminium hydroxychloride and a polyelectrolyte to eliminate suspended material, particularly small particles of mineral.

EP 0 064 252 A1

COMPLETE DOCUMENT

The current sorting technique in the extraction mining industry essentially comprises a grinding, either in a wet or in a dry condition, depending on the hardness of the mineral, and a subsequent sieving, the sieved material being then washed for the dust removal.

In the case of the wet grinding used for the less hard materials, a flocculation is carried out before the sieving.

Both the water effluent from the washing of the vibrating sieves, and that of the washing of the already sorted mineral, as well as lastly that effluent as the flocculation overnatant liquid, contain relevant amounts of mineral which must be separated (and possibly recovered), before the effluent can be disposed to waste or partially recycled.

To date for the treatment of these efflents recourse was made to a flocculation treatment by adding great amounts (about 200-300 ppm) of a cationic or non ionic polyelectrolyte, provided that an alkalinization with hydrated lime was previously carried out.

Such a treatment is not only relevantly expensive, but also leaves a remarkably high residual turbidity in the treated water.

The main purpose of the present invention is that of providing a treatment of the effluent water of mine extractive palnts which permits a substantial removal of the mineral particles present in suspension in the waters and their possible recovery at a remarkably contained cost.

This purpose is achieved by a process which is characterized in that the water to be treated is made alkaline up to a pH of at least 9 and then flocculated with an aluminium polyhydroxychloride having the general formula

$$Al_n(OH)_mCl_{3n-m}$$

in the presence of an anionic polyelectrolyte.

The experimental results in fact demonstrated that in comparison with the standard processes, by the process of the present invention an exceedingly high reduction of the suspended solids is attained and at the same time the amount of flocculating agent necessary to get such an improved result is reduced.

According to the preferred embodiment of the process of the invention the alkalinization step is carried out as in the prior art by adding hydrated lime

until the pH is brought to a value of 9 or higher.

The amount of polymeric aluminium hydroxychloride which is added either as a liquid and as a powdery solid is of about 70 to 200 ppm, whereas the amount of anionic polyelectrolyte, which can be anyone of the types well known in this field, varies between 1 and 10 ppm.

Comparison tests have been carried out between the process of the invention and that of the prior art on the effluent of a lignite mine, wherein the extracted mineral was wet ground and then separated by flocculation. The separated mineral was thereafter sieved and finally washed.

The flocculation sunatant waters, having a flow rate of 1,800 cu.m/hour had a pH of 7.8 and a content of suspended solids of 2-3,000 ppm.

According to the conventional process these waters were treated with 50 ppm of hydrated lime, to bring the pH to 9, and added with 200 ppm of a cationic polyelectrolyte of conventional type.

At the end of the flocculation the content of suspended solids was 200 ppm.

By using the process of the invention, the effluent of the flocculation was brought to pH 9 by means of 50 ppm of hydrated lime and then added with 70 ppm of Prodefloc AC 150/SAC (an aluminium polyhydroxychloride manufactured and sold by Prodeco Spa) and with 1 ppm of an anionic polyelectrolyte (Prodefloc A/3309 manufactured and sold by Prodeco Spa).

At the end of the flocculation the content of suspended matter was just 10 ppm.

By repeating the comparison test on the washing waters of the sieves, having a content of suspended solids of 3% and with 200 ppm of a cationic polyelectrolyte, the final concentration of suspended matter was 1.000 ppm.

In the case of the present invention, on the contrary, by using 200 ppm of aluminium polyhydroxychloride and 10 ppm of anionic polyelectrolyte, the content of suspended solids in the liquid resulting from the flocculation was 500 ppm.

The previous data are enough to confirm both quantitatively and qualitatively the advantages as achieved by the present invention, which, at the very end, results in a reduction of the treatment costs, namely of the costs of an operation which may heavily affect the industrial costs of the mineral

extraction.

One of the specific features of the invention resides in that the results of the treatment are clearly different depending on the fact a cationic polyelectrolyte or an anionic polyelectrolyte is used.

In the first instance, in fact, the results are clearly at least lower or even poor.

In this connection without any limiting purpose, it seems plausible the hypothesis according to which the possible electric charges of the suspended particles of mineral, especially in the case of coals, would be neutralized from the aluminium polyhydroxychloride, thus making it easier the aggregation and the carrying away with the flocks.

## CLAIMS

1. A process for the treatment of the effluent waters of mine extractive plants, characterized in that the water to be treated is made alkaline up to a pH of at least 9 and then flocculated, with aluminium polyhdroxychloride in the presence of an anionic polyelectrolyte.

2. A process according to claim 1, characterized in that said aluminium polyhydroxychloride is used in an amount of 70 to 200 ppm.

3. A process according to claim 1, characterized in that said anionic polyelectrolyte is used in an amount of 1 to 10 ppm.

4. A process according to claim 1, characterized in that said alkalinization is carried out with hydrated lime.

European Patent Office

**0064252**
Application number

# EUROPEAN SEARCH REPORT

EP 82 10 3525

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 304 328 (KURITA WATER) *Page 5, claims 1,4,5,8; page 2, lines 26-75; example 1* --- | 1-4 | C 02 F 1/52<br>B 03 D 3/06 |
| X | CHEMICAL ABSTRACTS, vol. 91, no. 14, 1st October 1979, page 283, no. 112265a, Columbus Ohio (USA); E.A.PROSHIN et al.: "Removal of suspended matter from highly mineralized natural water". & TR. INST. "VODGEO" 1977, 62, PT. 2, 25-32. *Astract* --- | 1 | |
| A | GB-A-1 563 996 (THE CITY UNIVERSITY) *Page 2, claims 1-9* --- | 1 | |
| A | FR-A-2 312 457 (MITSUI MINING) *Page 2, lines 17-35; page 7; claims 1-5* --- | 1-4 | TECHNICAL FIELDS SEARCHED (Int. Cl. 3)<br>C 02 F<br>B 03 D |
| A | US-A-3 862 027 (ENGELHARD MINERALS) ----- | | |

The present search report has been drawn up for all claims

| Place of search | Date of completion of the search | Examiner |
|---|---|---|
| THE HAGUE | 28-07-1982 | TEPLY J. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82